# EUROPEAN PATENT APPLICATION

(11) **EP 2 706 501 A1**
(43) Date of publication of application: **12.03.2014**
(21) Application number: 13183069.7
(22) Date of filing: 05.09.2013
(51) Int. Cl.: G06Q 50/00, G06Q 30/02

(54) **Social networking and fundraising method**

(30) Priority: 11.09.2012 US 201213609790
(71) Applicant: Klonaris-Robinson, Christina, Nassau (BS)
(72) Inventor: Klonaris-Robinson, Christina, Nassau (BS)
(74) Representative: Romano, Giuseppe

(57) **Abstract**

A social networking and fundraising method supports charitable causes. An author creates a story related to the charitable cause by way of a life experience of the author. A sponsor maintains a website, a central computer, and a database. The story and the author identity are stored on the database. A bracelet is created which is associated with each author.

The author identity and a link to the sponsor website is reproduced on the bracelet. The author creates a self-handprint, which is reproduced on the bracelet. The sponsor sells the bracelets to purchasers, who learn about the charities and stories. A portion of the sales proceeds from the bracelets go to the charitable cause with which the author is connected. The purchaser has access to the author's story on the sponsor central computer database. The purchaser can connect with other purchasers of bracelets associated with the same author.

## Description

### Field of the Invention

The present disclosure generally relates to a method for social networking. More particularly, the present disclosure relates to a social networking method that brings awareness to, and facilitates fundraising for, causes and worthy projects.

### Background of the Invention

The present invention provides a means for presenting a deserving author's story to others, so as to bring the story to the attention of the world community. The author would be associated with a charitable cause, a foundation, or a worthy project. The invention would provide a medium, through social networking, for the story that would otherwise not be widely disseminated.

The present invention further provides a means for raising funds for the charitable cause, foundation, or worthy project. The authors' life experiences represent the cause, foundation, or worthy project they wish to support. The authors' stories could, as examples, represent the life experiences of those who have lived and survived genocide, war, or chemical war. They may have survived human rights abuses like slavery, sexual exploitation, sexual violence, female genital mutilation, school bullying, or race or gender discrimination.

Further examples would be the stories of those that live with or have overcome illness or disease such as HIV and AIDS, cancer, diabetes, epilepsy, or autism. Stories can also represent hunger or water crisis, famine, poverty, disabilities, loss or tragedy, natural disaster, endangered animal or plant life, women's rights, birthing rights, homelessness, or any worthy cause that must be acknowledged and supported.

A yet further cause would be the support of children. On the one hand, they may be needy children who may be orphaned or homeless, and need the support of food, shelter, clothing, etc. On the other hand, they may be school children who want to connect with other school children in another city or country, to learn about other cultures and share fellowship.
Funds can be made available to renovate a school or build a new school.

What is desired is a social networking and fundraising method that will bring the stories of deserving authors to the attention of the world, and that will facilitate raising funds for charitable causes, foundations, and worthy projects with which the authors are connected, and to promote brotherhood and harmony worldwide.

### Summary of the Invention

A first aspect of the present invention provides a social networking and fundraising method that supports many charitable causes. At least one author is connected with each charitable cause. Each author has an author identity, including the author's name and home country. A story is created by the author. The story is related to the charitable cause by way of a life experience of the author.

A second aspect of the present invention provides a sponsor to support the charitable cause. The sponsor organizes and carries out the duties and responsibilities of practicing the method steps. The sponsor creates and maintains a sponsor website, and a sponsor central computer having a database. The story and the author identity is communicated to the sponsor central computer and stored on the sponsor central computer database. The sponsor is organized as a non-profit foundation.

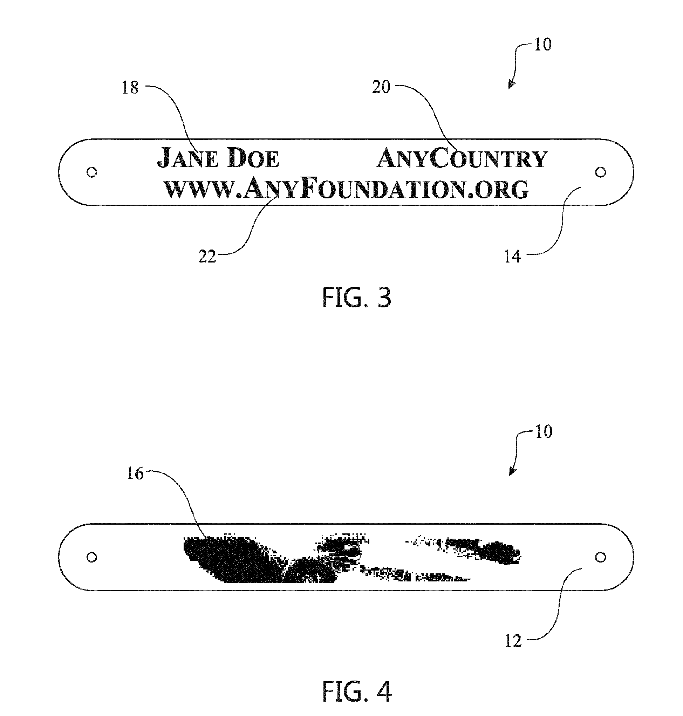

Referring to FIGS. 3 and 4, another aspect of the present invention provides a bracelet 10 created by a bracelet manufacturer. Each bracelet 10 will be specifically associated with one respective author. The slap bracelet has an outer surface 12 and an inner surface 14.
The author identity, including the author's name 18, country 20, and a link 22 to the sponsor website are reproduced as indicia 18, 20, and 22 on the bracelet inner surface 14. The author creates a self-handprint 16, a portion of which is reproduced on the bracelet outer surface 12.

In yet another aspect of the present invention, the sponsor sells the bracelet to at least one purchaser, who learns about the various charities and associated stories. A portion of the sales proceeds from the bracelets go to the charitable cause with which the author is connected.
The purchaser, using the link on the bracelet, is allowed to access the author's story on the sponsor central computer database. The purchaser connects with other purchasers of bracelets associated with the same author.

These and other advantages of the invention will be further understood and appreciated by those skilled in the art by reference to the following written specification, claims and appended drawings.

### Brief Description of the Drawings

The invention will now be described, by way of example, with reference to the accompanying drawings, in which:

FIG. 1 presents a detailed block diagram illustrating interconnections between various elements of the invention method;

FIG. 2 presents a flow chart depicting the flow of benefits from each element of the invention method to adjacent elements;

FIG. 3 presents a side elevational view of the inner surface of the bracelet, showing the indicia; and

FIG. 4 presents a side elevational view of the outer surface of the bracelet, showing the handprint.

Like reference numerals refer to like parts throughout the various views of the drawings.

### Detailed Description of the Invention

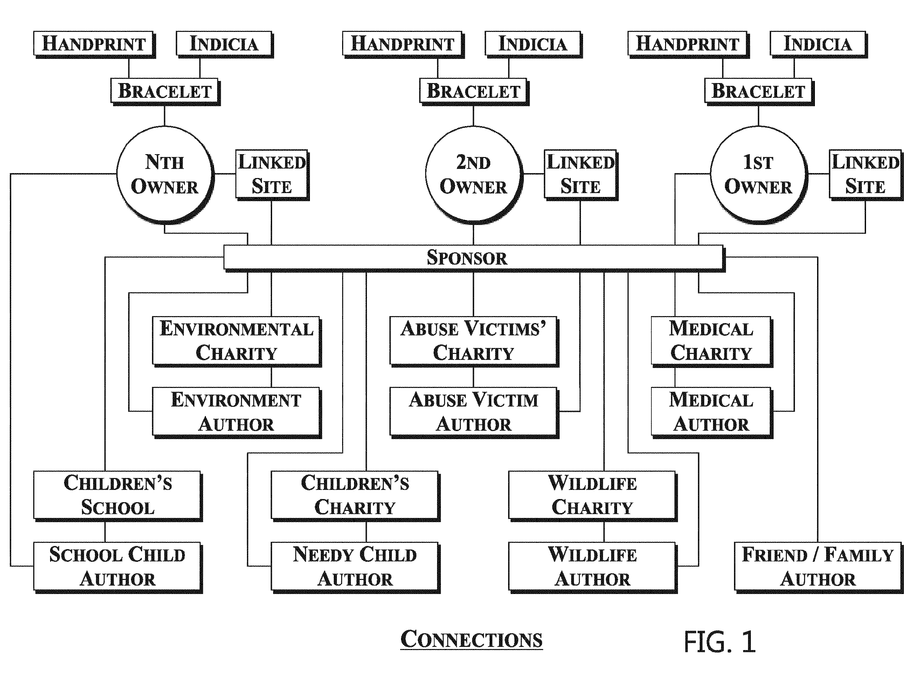

The following detailed description is merely exemplary in nature and is not intended to limit the described embodiments or the application and uses of the described embodiments.
As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to make or use the embodiments of the disclosure and are not intended to limit the scope of the disclosure, which is defined by the claims. For purposes of description herein, the terms "upper," "lower," "left," "rear," "right," "front," "vertical," "horizontal," and derivatives thereof shall relate to the invention as oriented in FIG. 1. Furthermore, there is no intention to be bound by any expressed or implied theory presented in the preceding technical field, background, brief summary or the following detailed description. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

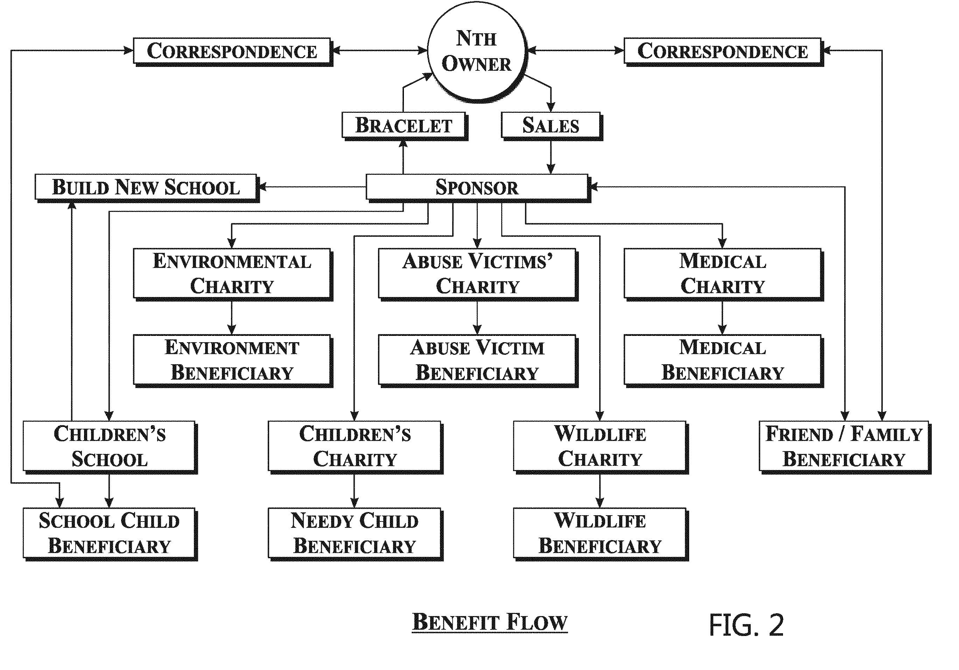

Referring to the drawings, FIG. 1 shows the connections between various elements in the method. These are communication links that can be internet, post, or telephone. FIG. 2 shows the flow of benefits, such as cash or other funds, communication, food aid, shelter, medicine, etc. The beneficiary is anyone who receives a benefit of any kind. A social networking and fundraising method is disclosed which involves supporting at least one charitable cause, and ideally involves many worthy charitable causes. The causes include, but are not limited to: a children's school; a needy children's charity; an abuse victim's charity; a wildlife organization; a medical treatment organization; a medical research organization; a civil rights organization; a warfare victim's charity; and a natural disaster victim's charity. The charities listed on FIG. 1 are a representative sample.

At least one author is connected with each charitable cause. Each author has an author identity, including the author's name and home country. A story is created by the author.
The story is related to the charitable cause by way of a life experience of the author. A given author may have been the victim of trafficking, domestic abuse, or civil rights violation. The story is that of being a victim, and is connected to an appropriate victim's charity. Another author may have been a cancer survivor, and is connected to a medical research lab or to a hospital. The author could be an animal rights activist writing on behalf of an endangered species. This author is connected to a wildlife charity. The author can be a school child wishing to learn about other children in other countries with different cultures. The author can be a family member who may or may not write a story, but can connect with other family or friends.

A sponsor is established to support the charitable cause. The sponsor organizes and carries out the duties and responsibilities of practicing the method steps as disclosed in the invention. The sponsor creates and maintains a sponsor website for online promotion and communication. The sponsor maintains a sponsor central computer having a sponsor central computer database. The author communicates the story and the author identity to the sponsor central computer by way of the sponsor website. The story is stored on the sponsor central computer database. The sponsor is preferably organized as a non-profit foundation. However, any business organizational structure can be employed.

Referring to FIGS. 3 and 4, a bracelet 10 is created by a bracelet manufacturer under contract, to a design specified by the sponsor. The bracelets 10 of a given production run will be specifically associated with one respective author. The bracelet is preferably injection molded from a thermoplastic or a thermoset polymer. The bracelet structure is a simple slap bracelet design that is easily placed on a wrist or ankle, although any design will work. The bracelet has an outer surface 12 and an inner surface 14. The author identity is communicated from the sponsor to a bracelet manufacturer. The author identity, including the author's name 18, country 20, and a link 22 to the sponsor website are reproduced as indicia 18, 20, and 22 on the bracelet inner surface 14, as shown in FIG. 3. The author creates a self-handprint 16 using an ordinary ink stamp-pad and paper. The self-handprint 16 is conveyed by the sponsor to the bracelet manufacturer. A portion of the self-handprint 16 is reproduced on the bracelet outer surface 12, as shown in FIG. 4. In the case of a wildlife author, the print 16 can be the author's self-handprint, or a pawprint of the subject animal.

The sponsor sells the bracelet to at least one purchaser, and preferably many purchasers. The owner in FIG. 1 is the purchaser and owner of the bracelet. The purchaser finds the sponsor website by advertising or word of mouth, and learns about the various charities and associated stories. A portion of the sales proceeds from the bracelets go to the charitable cause with which the author is connected. The purchaser, using the link on the bracelet, is allowed to access the author's story on the sponsor central computer database through the sponsor website.
The purchaser is further allowed to be connected with other purchasers of bracelets associated with the same author. This connection is by way of the internet, either directly with the sponsor website, or through a linked site, such as Facebook™.

Since many modifications, variations, and changes in detail can be made to the described preferred embodiments of the invention, it is intended that all matters in the foregoing description and shown in the accompanying drawings be interpreted as illustrative and not in a limiting sense. Thus, the scope of the invention should be determined by the appended claims and their legal equivalence.

## Claims

1. A social networking and fundraising method, involving at least one author, the author having an author identity, the method comprising the steps of:
- establishing a sponsor;
- creating a story, by the author, concerning at least a portion of the author's life;
- communicating the story and the author identity to a sponsor central computer by way of a sponsor website;
- storing the story on a sponsor central computer database;
- communicating the author identity from the sponsor to a bracelet manufacturer;
- creating at least one bracelet by the bracelet manufacturer, the bracelet being specifically associated with the author;
- reproducing the author identity on the bracelet;
- the sponsor selling the bracelet to at least one purchaser for a sales proceeds; and
- allowing the purchaser to access the author's story on the sponsor central computer database through the sponsor website.

2. A social networking and fundraising method as recited in claim 1, the method further comprising the steps of:
- including the author's name and home country in the author identity; and
- reproducing the author identity and a link to the sponsor website on the bracelet.

3. A social networking and fundraising method as recited in claim 2, wherein the bracelet has an outer surface and an inner surface, the method further comprising the steps of:
- creating a self-handprint, by the author;
- reproducing at least a portion of the self-handprint on the bracelet outer surface; and
- reproducing the author identity and a link to the sponsor website as indicia on the bracelet inner surface.

4. A social networking and fundraising method as recited in claim 3, the method further comprising the step of allowing the at least one purchaser to be connected with other purchasers of bracelets associated with the author, by way of an internet connection.

5. A social networking and fundraising method as recited in claim 4, wherein the at least one author is connected with at least one charitable cause, the method further comprising the steps of:
- connecting the story, by way of a life experience of the author, to the charitable cause;
- connecting the sponsor, by way of support, to the charitable cause; and
- donating a portion of the sales proceeds to the charitable cause with which the author is connected.

6. A social networking and fundraising method, involving at least one author connected with at least one charitable cause, the author having an author identity, the method comprising the steps of:
- establishing a sponsor to support the charitable cause;
- creating a story, by the author, related to the charitable cause by way of a life experience of the author;
- communicating the story and the author identity to a sponsor central computer by way of a sponsor website;
- storing the story on a sponsor central computer database;
- communicating the author identity from the sponsor to a bracelet manufacturer;
- creating at least one bracelet by the bracelet manufacturer, the bracelet being specifically associated with the author;
- reproducing the author identity on the bracelet;
- selling the bracelet to at least one purchaser for a sales proceeds;
- donating a portion of the sales proceeds to the charitable cause with which the author is connected; and
- allowing the purchaser to access the author's story on the sponsor central computer database through the sponsor website.

7. A social networking and fundraising method as recited in claim 6, the method further comprising the steps of:
- including the author's name and home country in the author identity; and
- reproducing the author identity and a link to the sponsor website on the bracelet.

8. A social networking and fundraising method as recited in claim 7, wherein the bracelet has an outer surface and an inner surface, the method further comprising the steps of:
- creating a self-handprint, by the author;
- reproducing at least a portion of the self-handprint on the bracelet outer surface; and
- reproducing the author identity and a link to the sponsor website as indicia on the bracelet inner surface.

9. A social networking and fundraising method as recited in claim 8, the method further comprising the step of allowing the at least one purchaser to be connected with other purchasers of bracelets associated with the author, by way of an internet connection.

10. A social networking and fundraising method, involving at least one author connected with at least one charitable cause, the author having an author identity, the method comprising the steps of:
- establishing a sponsor to support the charitable cause;
- creating a story, by the author, related to the charitable cause by way of a life experience of the author;
- communicating the story and the author identity to a sponsor central computer by way of a sponsor website;
- storing the story on a sponsor central computer database;
- communicating the author identity from the sponsor to a bracelet manufacturer;
- creating at least one bracelet by the bracelet manufacturer, the bracelet being specifically associated with the author, the bracelet having an outer surface and an inner surface;
- including the author's name and home country in the author identity;
- reproducing the author identity and a link to the sponsor website as indicia on the bracelet inner surface;
- creating a self-handprint, by the author;
- reproducing at least a portion of the self-handprint on the bracelet outer surface;
- selling the bracelet to at least one purchaser for a sales proceeds;
- donating a portion of the sales proceeds to the charitable cause with which the author is connected;
- allowing the purchaser to access the author's story on the sponsor central computer database through the sponsor website; and
- allowing the purchaser to be connected with other purchasers of bracelets associated with the author, by way of an internet connection.

11. A social networking and fundraising method, as recited in claim 10, wherein the charitable cause further comprises a children's school.

12. A social networking and fundraising method, as recited in claim 10, wherein the charitable cause further comprises an environmental organization.

13. A social networking and fundraising method, as recited in claim 10, wherein the charitable cause further comprises a needy children's charity.

14. A social networking and fundraising method, as recited in claim 10, wherein the charitable cause further comprises an abuse victim's charity.

15. A social networking and fundraising method, as recited in claim 10, wherein the charitable cause further comprises a wildlife organization.

16. A social networking and fundraising method, as recited in claim 10, wherein the charitable cause further comprises a medical treatment organization.

17. A social networking and fundraising method, as recited in claim 10, wherein the charitable cause further comprises a medical research organization.

18. A social networking and fundraising method, as recited in claim 10, wherein the charitable cause further comprises a civil rights organization.

19. A social networking and fundraising method, as recited in claim 10, wherein the charitable cause further comprises a warfare victim's charity.

20. A social networking and fundraising method, as recited in claim 10, wherein the charitable cause further comprises a natural disaster victim's charity.
